# EUROPEAN PATENT APPLICATION

(11) **EP 2 043 198 A2**
(43) Date of publication of application: **01.04.2009**
(21) Application number: 07380345.4
(22) Date of filing: 10.12.2007
(51) Int. Cl.: H01R 11/11, H01R 13/04

(54) **Terminal casing designed for assembling cables**

(30) Priority: 28.09.2007 ES 200702539
(71) Applicant: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio

(57) **Abstract**

The invention refers to some modifications to cable terminal casing used in different parts of a car to facilitate the assembly of such cables to devices, such as brakes, clutches, window lifters, accelerators and similar equipment.

## Description

More specifically, the invention refers to some modifications to cable terminal casing used in different parts of a car to facilitate the assembly of such cables to devices, such as brakes, clutches, window lifters, accelerators and similar equipment.

These devices are known to use a cable in addition to other parts which is placed into a terminal casing called a male part, sliding longitudinally inside of a female body or external conduit, housed in the car's bodywork.

Also, these terminal casings allow the gradual assembly of such cables on the assembly line when they are included in the car. These must have a run to connect the different parts in a device, such as a brake, clutch, accelerator to the mechanism on which they operate. For example the shoe plates on the brake disk, the clutch plate and the carburettor lever.

The production line requires that the operator assembling the cable in the car's bodywork preferably uses a force to extract the male part from inside the female body that is always less than that used for plugging it in. That is to say facilitating the most common action, assembling the cable with its cover and makes its unnecessary disassembly harder. This avoids wasting time as a consequence of the lack of friction between the male part and the female holder resulting in an unnecessary, accidental separation.

In order to obtain a variable holding force between both male and female parts, a special configuration of the male part's neck has been designed. This includes a circular spot extending into the trunk of an inverted cone so that when the male part goes into the female part, the O-ring is always in the circular slot. Whereas when the male part is to be extracted from the female part, the O-ring slides along an inclined plane with more surface area and therefore more friction against the inner surface of the female part offering more resistance and achieving the required effect.

The male part, which the subject of the specified design improvements, has a preferably cylindrical body the upper base of which extends upwards to a cylindrical part with a smaller diameter. The main cylindrical part of this upper cylindrical section has a small rebate with a slot around the edge about one third from the top housing the O-ring. This slot extends into an inverted conical ramp with this becoming slightly cylindrical. The male part is crossed on the inside by a longitudinally drilled hole to allow the cable to pass through. Other details and characteristics shall be shown throughout the description below referring to drawings attached to this report which are shown for illustrative but not limiting purposes only in a drawing of the invention.

A detailed list of the main parts shown in the attached drawings is given below and detailed in the attached diagrams; (10) male part, (11) main body, (12) second cylindrical section, (13) neck, (14) slot, (15) conical section, (16) head, (17) upper base, (18) lower base, (21) O-ring, (22) ribs, (23) female part, (24) drilled hole, (25) lower surface of the drilled hole (24), (26) upper surface of the drilled hole (24).

Figure 1 is a schematic front view of the male part (10).

Figure 2 is a top plan view male part (10).

Figure 3 a longitudinal cross section cut A-A', according to the figure 1 of the male part (10).

Figure 4 is a front View of the upper section of the male part (10), showing the joint attachment (21) where the male part is introduced (10) inside the female part (23).

Figure 5 is a front view of the upper section of the male part (10), showing the attachment of the joint (21) in the position of the extraction of the male part (10) from the female part (23).

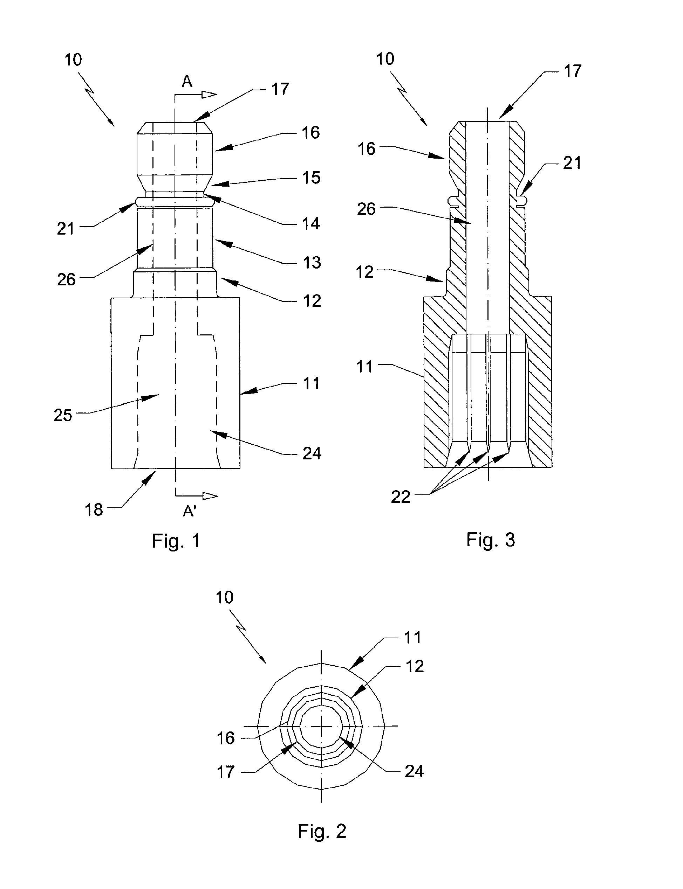

In one of the preferred implementations which is the purpose of this application and as shown in Figure 1, a Terminal casing used on a cable operating a brake, clutch, accelerator or similar and the corresponding assembly on the car's bodywork includes, among other things, a male part(10), placed into a female sleeve (23) or conduit housed in the car's bodywork, not shown in the figure, with the internal configuration houses a preferably cylindrical male part.

The male part (10) is preferably cylindrical formed by the main body (11) with an external cylindrical surface and a lower base (18), extending upwards to a second cylindrical section (12) with a smaller diameter than the aforementioned main body (11) and slightly higher extending in turn to another cylindrical section or neck (13) also externally cylindrical and with a smaller diameter than the aforementioned second cylindrical section (12), ending at the top with a rebated section (14), such rebated section (14) extends upwards to a rising conical section (15), slightly higher crowned at the top by a cylindrical head (16) on the upper base (17).

Crossing the inside of the male part (10) is a vertically drilled hole (24) that is to say going from the lower base (18) up to the upper base(17) to allow the cable to pass through.

As shown in Figure 3, the inner drilled hole (24) has an upper cylindrical surface (26) and an extended lower cylindrical surface (25) corresponding to the main body (11). This lower cylindrical surface (25) includes a series of longitudinal projections (22) distributed axially at a certain distance, preventing the play between both parts (10 - 23), when the male part (10) is in the female part (23).

The aforementioned slot or rebated section (14) houses the O-ring (21), as shown in Figure 1, working in two different positions.

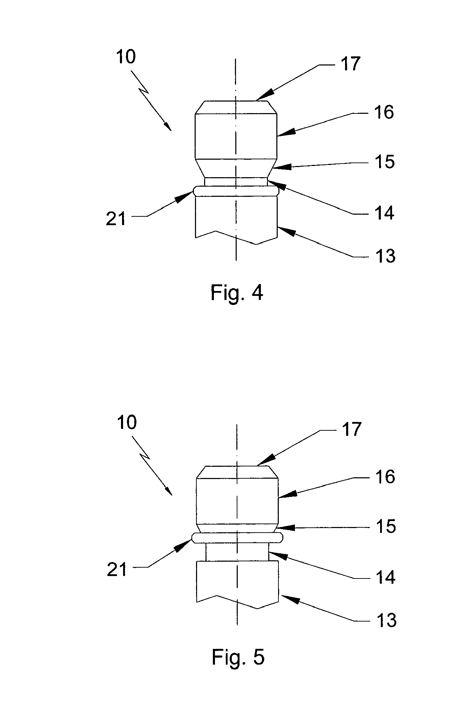

The first position is when the male part (10) or terminal casing is placed inside the female part (23) or seal conduit (21) in the lowest position of the rebate or slot (14). When the joint is occupied (21) the lowest point of the slot or rebate (14) its diameter is a s small as possible as the joint (21) is not subject to any axial force outwards, on the contrary there is an axial compression force. See Figure 4.

The second position is when the male part (10) is extracted from the female part (23). The opposite effect to the first position is produced here, as the friction force on the O-ring (21) against the inner surface of the female part (23) forces this joint (21) to move upwards along the conical section (15). As this section is conical (15) with an increasing diameter, thi9s causes a slight increase to the diameter of the joint (21), thereby increasing the friction on the inner surface of the female part (23), See Figure 5.

In this way, due to the innovative layout, the required effect is obtained when the male part (10) is placed in the female sleeve (23) with lees force required than removing the same.

The inner diameter of the O-ring (21) must be Duch that it guarantees the placing of the same around the rebated section (14), and in turn the external diameter of the same must guarantee it butting up against the upper base of the neck (13) and on the other hand ensuring the appropriate friction against the inner surface of the female part (23).

Having sufficiently described this invention using the figures attached, it is easy to understand that any modification may be made to the detail which may be deemed to be appropriate whenever these do not affect the essential nature of the invention summarised in the following claims

## Claims

1. ª - "TERMINAL CASING DESIGNED FOR ASSEMBLING CABLES" operating in conjunction with the female part or conduit inserted in the car's bodywork and allowing the inclusion of a cable to a device on which the brake, accelerator, clutch and similar devices are applied **characterised by** the fact that the male part (10) has a preferably cylindrical shape, formed by the main, cylindrical body (11) on the lower base (18), extending upwards to a cylindrical section (12) with a smaller diameter than the main body (11) and slightly higher, which in turn extends upwards to a cylindrical neck (13) ending at the top in a slot or rebate (14), around which (14), is an O-ring (21), with this cylindrical neck (13) extending upwards to a rising conical section (15) slightly higher crowned by a cylindrical head (16) on the upper base (17), housing the whole male sleeve body (10) using a drilled hole (24) going from the lower base (18) to the upper base (17) of the part (10).

2. ª - "TERMINAL CASING DESIGNED FOR ASSEMBLING CABLES" according to the first claim **characterised by** the fact that when the male part (10) is placed inside the female part (23) the O-ring (21) is in the lowest position of the rebate or slot (14), and when the male part (10) is extracted from the female part (23) the O-ring (21) expands against the inner surface of (23), forcing this joint (21) to move upwards to the conical area (15).

3. ª - - "TERMINAL CASING DESIGNED FOR ASSEMBLING CABLES" according to the first claim **characterised by** the fact that the drilled hole (24) has an upper cylindrical surface (26) and an expanded lower cylindrical surface (25) for the main body section (11), with the lower cylindrical surface (25) having a series of longitudinal and vertical ribs (22) distributed in a circular fashion at certain distances from each other.
